# EUROPÄISCHE PATENTANMELDUNG

(11) **EP 0 816 048 A1**
(43) Veröffentlichungstag der Anmeldung: **07.01.1998**
(21) Anmeldenummer: 97111120.8
(22) Anmeldetag: 03.07.1997
(51) Int. Cl.: B29C 47/50, B29C 47/76

(54) **Zweistufige Extrusionsanlage und Verfahren zum Extrudieren von Kautschukmischungen und Kunststoffen**

(30) Priorität: 05.07.1996 DE 19627080; 20.11.1996 DE 19647909
(71) Anmelder: Paul Troester Maschinenfabrik, D-30519 Hannover (DE)
(72) Erfinder: Klein, Heinz, 30982 Pattensen (DE)
(74) Vertreter: Junius, Walther, Dr.

(57) **Zusammenfassung**

Die Erfindung betrifft eine zweistufige Extrusionsanlage und ein Verfahren zum Extrudieren von Kautschukmischungen und Kunststoffen mit einer zwischen den beiden Stufen angeordneten Evakuierungsvorrichtung. Es ist die Aufgabe der Erfindung, in einfacher Weise und mit einfachen Mitteln eine kostengünstiger anzuschaffende und zu betreibende zweistufige Extrusionsanlage zu schaffen. Die Erfindung besteht darin, daß man als erste Extrusionsstufe einen Zahnradextruder (1) verwendet, daß man als zweite Extrusionsstufe einen Schneckenextruder (2) verwendet, daß man unmittelbar hinter der ersten Extrusionsstufe das Extrudat z.B. durch einen Strainer (3) in kleine Stränge (5) aufspaltet und dieses aufgespaltene Extrudat in den Eingang der zweiten Extrusionsstufe durch einen Raum fallen läßt, der an eine Vakuumpumpe (8) angeschlossen ist. Diese Anlage ist durch den Einsatz des Zahnradextruders (1) preisgünstig in der Anschaffung und kostengünstig im Betrieb. Der Strainer (3) dient hier neben dem Aufspalten in viele Teilstränge (5) kleinen Durchmessers und dem Aussortieren von Fremdkörpern auch dem weiteren Mischen und Aufschließen sowie Plastifizieren des zu extrudierenden Materiales. Durch die Feinaufspaltung des Extrudates in sehr viele Stränge (5) kleinstmöglichen Querschnitts kann Luft und Gas leicht entweichen. Wesentliche Vorteile dieser Anlage sind geringe Erhitzung des Extrudates, preisgünstige Anschaffung, geringer Energieverbrauch und Platzbedarf.

## Beschreibung

Die Erfindung betrifft eine zweistufige Extrusionsanlage und ein Verfahren zum Extrudieren von Kautschukmischungen und Kunststoffen mit einer zwischen den beiden Stufen angeordneten Evakuierungsvorrichtung.

Aus Kautschukmischungen und Kunststoffen hergestellte strangförmige Produkte müssen in den meisten Anwendungsfällen poren- und blasenfrei hergestellt sein. Derartige strangförmige Produkte werden in Extrusionsanlagen erzeugt. Die Bearbeitung von Kautschukmischungen und Kunststoffen in Extrusionsanlagen bringt es mit sich, daß beim Einzug des zu extrudierenden Materials Luft mit in den Extruder eingezogen wird, die Bearbeitung in Schneckenextrudern bringt es weiter mit sich, daß das zu extrudierende Material während des Durchganges durch diese Schneckenextruder stark erwärmt wird, oft so stark, daß das zu extrudierende Material anfängt zu gasen. Die eingezogene Luft und das sich bildende Gas gelangen als Poren oder Blasen in das extrudierte Produkt und machen dieses wertlos oder führen zu starker Qualitätsminderung.

Häufig soll auch eingemischtes Treibmittel bei einer bestimmten Temperatur gasen, z.B. bei der Herstellung von Moosgummi und ähnlichen Produkten. Dabei müssen den Mischungen vorher alle unkontroliert gasenden Stoffe bei maximal zulässiger Temperatur in Vakuumextrudern entzogen werden.

Zur Vermeidung dieses Nachteils hat man Extrusionsanlagen entwickelt, bei denen zwischen einer dem Eingangsbereich nachgeschalteten Bearbeitungszone, in der das zu extrudierende Material plastifiziert und aufgeschlossen wird, und dem Endbereich, in welchem der für die Extrusion notwendige Druck aufgebaut wird, eine Evakuierungszone zum Absaugen von Luft und Gas angeordnet ist. In einfachen Ausführungen ist diese Evakuierungszone etwa in der Mitte eines Schneckenextruders angeordnet, indem eine sogenannte Riffelzone angeordnet und der Schneckenkerndurchmesser zwecks Druckaufbau vor der Riffelzone erheblich verringert ist und der Extruderzylinder in dieser Zone mit einem Anschluß für eine Vakuumpumpe versehen ist. Aufwendigere Extrusionsanlagen sind zweistufig aufgebaut, indem zwei Schneckenextruder hintereinander geschaltet sind und zwischen diesen ein Raum angeordnet ist, der an die Vakuumpumpe angeschlossen ist (DE 22 55 473). Diese aufwendigeren Anlagen setzt man dort ein, wo es aus Gründen der Durchsatzmenge und/oder der Temperaturführung erforderlich ist. Die Anschaffung derartiger zweistufiger Extrusionsanlagen ist mit erheblichen Kosten verbunden, ihr Betrieb ist energieaufwendig und teuer.

In der Extrusionstechnik werden oftmals Strainer in Anwendung gebracht, Siebe, welche nach dem Plastifizieren und Aufschließen des zu extrudierenden Materiales in diesem noch befindliche Fremdkörper und unaufgeschlossene Teile zurückhalten, bevor diese Masse extrudiert wird. Diese Strainer werden üblicherweise am Ende des Weges angeordnet, den die zu extrudierende Masse in der Extrusionsanlage nimmt, also vor oder im Spritzkopf.

Neben den Schneckenextrudern sind auch Zahnradpumpenextruder z.B. aus der DE-A-345 406 bekannt geworden. Doch haben diese, obwohl sie mehr als sieben Jahrzehnte bekannt sind, praktisch keinen Eingang in die Extrusionstechnik gefunden. In diesen Extrudern finden die Vorgänge des Mischens, Plastifizierens und Aufschließens sowie die des Aufbaues des Extrusionsdruckes auf kleinstem Raum statt, der nur das von den Zahnlücken der Zahnrades eingenommene Volumen aufweist und nur über die Drehzahl beeinflußbar ist. Des weiteren weisen die bisher bekannten Konstruktionen Fütter- und Einzugsprobleme auf. Vielleicht lag es daran, daß die Fachwelt diese Art von Extrudern deshalb nicht für praktisch einsatzfähig hielt.

Die Erfindung vermeidet die Nachteile des Standes der Technik. Es ist die Aufgabe der Erfindung, in einfacher Weise und mit einfachen Mitteln eine kostengünstiger anzuschaffende und zu betreibende zweistufige Extrusionsanlage zu schaffen.

Die Erfindung besteht darin, daß man als erste Extrusionsstufe einen Zahnradextruder verwendet, daß man als zweite Extrusionsstufe einen Schneckenextruder verwendet, daß man am Ende oder unmittelbar hinter der ersten Extrusionsstufe das Extrudat strainert, fein zerteilt und/oder aufspaltet und dieses fein zerteilte und/oder aufgespaltene Extrudat beim Übergang in die zweite Extrusionsstufe in einen Raum treten läßt, der an eine Vakuumpumpe angeschlossen ist.

Auf diese Weise gelingt es, in einfacher Weise in der ersten gegenüber einem Schneckenextruder viel weniger aufwendigen und energiegünstiger arbeitenden Stufe das Extrudat unter geringer Temperaturbeastung so unter Druck zu setzen, daß man es fein zerteilen kann, um es zu entgasen und zu entlüften. Die zweite Stufe dient dann der finalen Behandlung des Extrudates. Die in der ersten Stufe verwendete Zahnradpumpe macht die ganze Anlage flexibler und schneller an die Bedürfnisse der Verarbeitung unterschiedlicher Mischungen und an die Bedürfnisse des nachfolgenden Schneckenextruders anpassbar.

Von besonderem Vorteil ist es, daß man mit der Feinzerteilung und Aufspaltung unmittelbar hinter dem Zahnradpaar beginnt.

Zwei Möglichkeiten eröffnen sich hier für die Behandlung des zu extrudierenden Materiales:

Die eine besteht darin, daß man das gestrainerte, fein zerteilte oder aufgespaltene Extrudat im freien Fall durch den Raum fallen läßt, der an die Vakuumpumpe angeschlossen ist. Die andere Möglichkeit besteht darin, daß man die Extruderschnecke der zweiten Stufe das gestrainerte, fein zerteilte oder aufgespaltene Extrudat von dem die Zerteilung vornehmenden Gegenstand abschneiden oder abschaben und übernehmen läßt und in den Bereich der tiefen Schneckengänge des Schneckenextruders überführt, wobei man diesen Bereich evakuiert.

Soll in das zu extrudierende Material eingemischtes Treibmittel bei einer bestimmten Temperatur gasen, z.B. bei der Herstellung von Moosgummi und ähnlichen Produkten, ist es zweckmäßig, daß man den Zahnradextruder, insbesondere dessen Gehäuse, bis knapp unter die Treibmittel-Gasungstemperatur temperiert. Dabei werden den zu extrudierenden Mischungen in der Vakuumzone alle unkontroliert gasenden Stoffe bei maximal zulässiger Temperatur entzogen.

Zur Durchführung dieser Verfahren benutzt man eine zweistufige Extrusionsanlage zum Extrudieren von Kautschukmischungen und Kunststoffen mit einer zwischen den beiden Stufen angeordneten Evakuierungsvorrichtung, die sich dadurch auszeichnet, daß die erste Extrusionsstufe durch einen Zahnradextruder gebildet ist, daß die zweite Extrusionsstufe durch einen Schneckenextruder gebildet ist, daß am Ende oder unmittelbar hinter der ersten Extrusionsstufe ein Strainer angeordnet ist, daß unter dem Strainer der Eingang der zweiten Extrusionsstufe und zwischen dem Strainer und dem Eingang der zweiten Extrusionsstufe ein Raum angeordnet ist, der an eine Vakuumpumpe angeschlossen ist.

Diese Anlage ist durch den Einsatz eines Zahnradextruders preisgünstig in der Anschaffung und kostengünstig im Betrieb. Der Strainer dient hier nicht nur dem Aussortieren von Fremdkörpern, sondern dient auch dem weiteren Mischen und Aufschließen sowie Plastifizieren des zu extrudierenden Materiales, vor allem aber der Feinaufspaltung des Extrudates in möglichst viele Stränge kleinstmöglichen Querschnitts, aus denen Luft und Gas leicht entweichen können. Ein wesentlicher Vorteil der Verwendung des Zahnradextruders mit nachgeschalteter Aufspaltvorrichtung (Strainer) in der ersten Stufe besteht darin, daß in ihm das zu extrudierende Material bei gleichem Grad der Plastifizierung und Aufschließung wesentlich weniger stark erwärmt wird als in einem Schneckenextruder, so daß es in vielen Anwendungsfällen gar nicht zu einem Gasen des zu extrudierenden Materials kommt.

Wenn aber gasende Bestandteile entfernt werden sollen, die ihre Vergasungstemperatur in der erste Stufe nicht erreichen,ist der Zahnradextruder in seinem Temperaturniveau z.B. durch Beheizen, Veränderung der Arbeitsgeschwindigkeit oder Vergrößerung des Arbeitswiderstandes zu erhöhen.

Zwei bevorzugte Möglichkeiten der Gestaltung dieses Anlage erweisen sich als besonders vorteilhaft:

Bei der einen Ausgestaltung verwendet man einen zwischen den beiden Stufen angeordneten Raum, der an die Vakuumpumpe angeschlossen ist und durch den das gestrainerte fein zerteilte oder aufgespaltene Extrudat im freien Fall fällt.

Die andere Ausgestaltung besteht darin, daß unmittelbar anschließend an die Ausgangsseite des Strainers und/oder der Zerteilvorrichtung neben der Ausgangsseite der Zerteilvorrichtung die Extruderschnecke der zweiten Stufe in einem solchen Abstand angeordnet ist, daß sie das gestrainerte, fein zerteilte oder aufgespaltene Extrudat von der Zerteilvorrichtung abschneidetoder abschabt und direkt in die tief geschnittenen Schneckengänge übernimmt.

Dabei kann es vorteilhaft sein, daß die Schnecke des Schneckenextruders in der zweiten Stufe im Einzugsbereich einen möglichst kleinen Schneckenkerndurchmesser und im Ausstoßbereich einen großen Schneckenkerndurchmesser aufweist, wodurch die feinen Stränge im ersten Bereich, in den das Vakuum hineinreicht, entgast und einer Bewegung unterworfen werden, bevor sie erneut zu einem einzigen dicken Strang zusammengepreßt werden.

Diese Extrusionsvorrichtung läßt sich mit Vorteil so ausführen, daß der Strainer in Form einer Lochplatte in einer Lochplattenwechselvorrichtung für ununterbrochenen Dauerbetrieb ausgeführt ist.

Das Wesen der Erfindung ist nachstehenmd anhand von in der Zeichnung schematisch dargestellten Ausführungsbeispielen näher erläutert. Es zeigen:
- Fig.1: einen Schnitt durch eine zweistufige Extrusionsanlage mit evakuiertem Raum zwischen den beiden Stufen,
- Fig.2: einen Schnitt durch eine zweistufige Extrusionsanlage, deren Strangzerteilvorrichtung die Extruderschnecke teilweise umgibt.

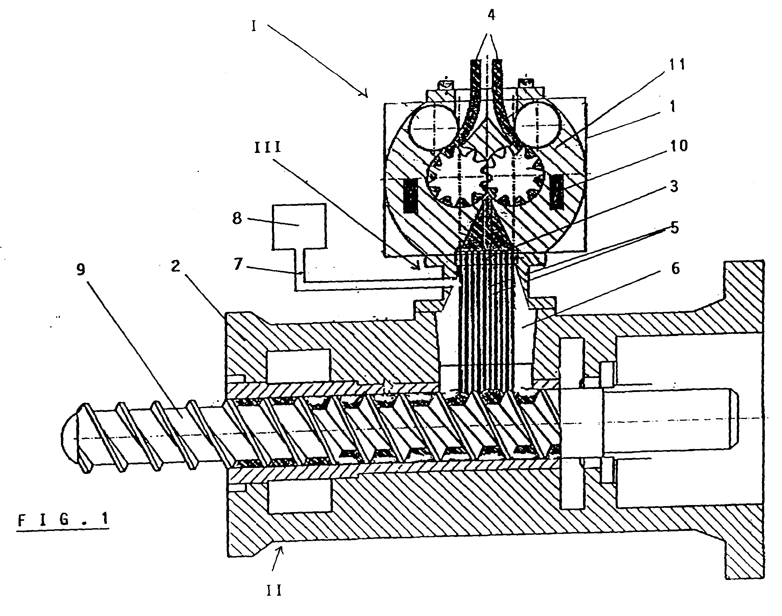

Die in Fig.1 dargestellte zweistufige Extrusionsanlage zum Extrudieren von Kautschukmischungen und Kunststoffen mit einer zwischen den beiden Stufen angeordneten Evakuierungsvorrichtung weist eine erste Extrusionsstufe I auf, die durch einen Zahnradextruder 1 gebildet ist, der mit zwei Strängen 4 von zu verarbeitendem Material gefüttert wird, sowie eine zweite Extrusionsstufe II, die durch einen Schneckenextruder 2 gebildet ist. Unmittelbar hinter der ersten Extrusionsstufe I ist ein Strainer 3 als Zerteilvorrichtung angeordnet, durch den das aus dem Zahnradextruder 1 extrudierte Material gepreßt wird und in dem dieses Material in eine große Vielzahl feinster Stränge 5 zerteilt wird. Diese feinsten Stränge 5 fallen in freiem Fall durch den Raum 6 der Evakuierungsvorrichtung III. An diesen Raum 6 ist über die Leitung 7 eine Vakuumpumpe 8 angeschlossen. Diese feinen Stränge 5 fallen in den Eingang des Schneckenextruders 2 der zweiten Extrusionsstufe II.

Die Schnecke 9 des Schneckenextruders 2 der zweiten Extrusionsstufe weist im Einzugsbereich einen kleinen Schneckenkerndurchmesser und im Ausstoßbereich einen großen Schneckenkerndurchmesser auf.

Für Sonderfälle, in denen das Extrudat nicht ausreichende Temperaturen aufweist, ist eine Temperiervorrichtung 10 für das Gehäuse 11 der Zahnradpumpe 1 vorgesehen.

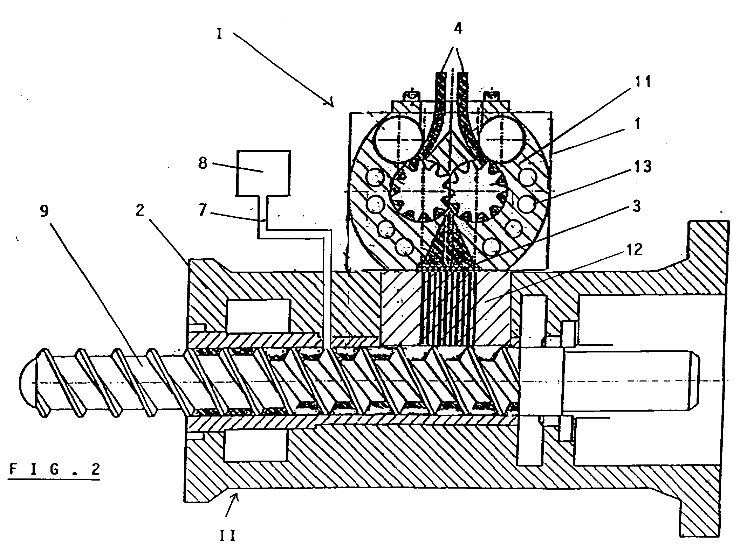

Im Ausführungsbeispiel der Fig.2 erstreckt sich der die Zerteilvorrichtung bildende Block 12 vom Gehäuse 11 des Zahnradextruders 1 bis unmittelbar vor die Schnecke 9, deren Schneckenwindungen daher aus dem Block 12 austretende Stränge des Extrudats abschneiden und abschaben und auf diese Weise feinst zerteilen, bevor diese Teile in die Schneckengänge gelangen. Die zur Vakuumpumpe 8 führende Leitung 7 ist durch den Zylinder des Schneckenextruders 2 an einer Stelle geführt, an der der Schneckenkerndurchmesser klein ist und daher die Schneckengänge nur teilweise mit Extrudat gefüllt sind.

Bei dieser Ausführungsform sind für die Temperierung des Gehäuses 11 des Zahnradextruders 1 Kanäle 13 in das Gehäuse 11 gebohrt, die von Heiz- oder Kühlmittel je nach Bedarf durchflossen werden.

### Liste der Bezugszeichen

- 1: Zahnradextruder
- 2: Schneckenextruder
- 3: Aufspaltvorrichtung (Strainer,Lochplatte)
- 4: Strang von Fütterungsmaterial
- 5: feinste Stränge
- 6: Entgasungsraum
- 7: Leitung
- 8: Vakuumpumpe
- 9: Schnecke
- 10: Temperierungsvorrichtung
- 11: Gehäuse
- 12: Zerteilvorrichtung
- 13: Kanal für Temperierungsmittel
- I: erste Extrusionsstufe
- II: zweite Extrusionsstufe
- III: Evakuierungsvorrichtung

## Patentansprüche

1. Verfahren zum Extrudieren von Kautschukmischungen und Kunststoffen in einer zweistufigen Extrusionsanlage mit einer zwischen den beiden Stufen angeordneten Evakuierungsvorrichtung,
dadurch gekennzeichnet,
daß man als erste Extrusionsstufe einen Zahnradextruder verwendet,
daß man als zweite Extrusionsstufe einen Schneckenextruder verwendet,
daß man am Ende oder unmittelbar hinter der ersten Extrusionsstufe das Extrudat strainert, fein zerteilt und/oder aufspaltet
und dieses fein zerteilte oder aufgespaltene Extrudat beim Übergang in die zweite Extrusionsstufe in einen Raum treten läßt, der an eine Vakuumpumpe angeschlossen ist.

2. Verfahren nach Anspruch 1,
dadurch gekennzeichnet,
daß man mit der Feinzerteilung und Aufspaltung unmittelbar hinter dem Zahnradpaar beginnt.

3. Verfahren nach Anspruch 1,
dadurch gekennzeichnet,
daß man das fein zerteilte oder aufgespaltene Extrudat im freien Fall durch den Raum fallen läßt, der an die Vakuumpumpe angeschlossen ist.

4. Verfahren nach Anspruch 1,
dadurch gekennzeichnet,
daß man die Extruderschnecke der zweiten Stufe das gestrainerte, fein zerteilte oder aufgespaltene Extrudat von dem die Zerteilung vornehmenden Gegenstand abschneiden oder abschaben läßt und in den Bereich der tiefen Schneckengänge des Schneckenextruders überführt,
wobei man diesen Bereich evakuuiert.

5. Zweistufige Extrusionsanlage zum Extrudieren von Kautschukmischungen und Kunststoffen mit einer zwischen den beiden Stufen angeordneten Evakuierungsvorrichtung,
dadurch gekennzeichnet,
daß die erste Extrusionsstufe (I) durch einen Zahnradextruder (1) gebildet ist,
daß die zweite Extrusionsstufe (II) durch einen Schneckenextruder (2) gebildet ist,
daß am Ende oder unmittelbar hinter der ersten Extrusionsstufe (I) ein Strainer (3) angeordnet ist,
daß unter dem Strainer (3) der Eingang der zweiten Extrusionsstufe (II) und zwischen dem Strainer (3) und dem Eingang der zweiten Extrusionsstufe (II) ein Raum (6) angeordnet ist, der an eine Vakuumpumpe (8) angeschlossen ist.

6. Extrusionsvorrichtung nach Anspruch 5,
gekennzeichnet durch
einen zwischen den beiden Stufen angeordneten Raum, der an die Vakuumpumpe angeschlossen ist, durch den das gestrainerte, fein zerteilte oder aufgespaltene Extrudat im freien Fall fällt.

7. Extrusionsvorrichtung nach Anspruch 5,
dadurch gekennzeichnet,
daß der Strainer (3) und/oder die Aufspalt- und Zerteilvorrichtung unmittelbar hinter dem Zahnradpaar der ersten Extrusionsstufe (I) angeordnet ist.

8. Extrusionsvorrichtung nach Anspruch 5,
dadurch gekennzeichnet,
daß unmittelbar anschließend an die Ausgangsseite des Strainers und/oder der Zerteilvorrichtung der Zerteilvorrichtung die Extruderschnecke der zweiten Stufe in einem solchen Abstand angeordnet ist,
daß sie das gestrainerte, fein zerteilte oder aufgespaltene Extrudat von der Zerteilvorrichtung abschneidet, abschabt und übernimmt.

9. Extrusionsvorrichtung nach Anspruch 5,
dadurch gekennzeichnet,
daß die Schnecke des Schneckenextruders der zweiten Extrusionsstufe im Einzugsbereich einen kleinen Schneckenkerndurchmesser und im Ausstoßbereich einen großen Schneckenkerndurchmesser aufweist.

10. Extrusionsvorrichtung nach Anspruch 5,
dadurch gekennzeichnet,
daß der Strainer in Form einer Lochplatte in einer Lochplattenwechselvorrichtung für ununterbrochenen Dauerbetrieb ausgeführt ist.
